# EUROPEAN PATENT APPLICATION

(11) **EP 4 804 700 A1**
(43) Date of publication of application: **09.09.2026**
(21) Application number: 23957339.7
(22) Date of filing: 03.11.2023
(51) Int. Cl.: H04W 74/00

(54) **METHOD FOR USE IN NODE FOR WIRELESS COMMUNICATION AND APPARATUS**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/129678
(87) International publication number: WO 2025/091483

(57) **Abstract**

A method in a node for wireless communication, and a device are provided, which facilitate determining of an uplink timing in multiple PRACH transmissions. The method includes: transmitting at least one preamble on a first RO set, and receiving a first RAR within a first time window, where the first RAR includes a first TAC, the first RO set includes N PRACH occasions, a last PRACH occasion among the N PRACH occasions is used for determining a start of the first time window. The at least one preamble is respectively carried on at least one PRACH occasion among the first RO set, a first preamble is one of the at least one preamble, first uplink timing is related to both the first TAC and transmission timing of the first preamble, and N is one of 2, **4,** or 8.

## Description

### TECHNICAL FIELD

The present disclosure relates to the field of communication technologies, and more specifically, to a method and a device in a node for wireless communication.

### BACKGROUND

To enhance the coverage performance of random access, some communication systems (e.g., new radio (NR) systems) are expected to introduce multiple physical random access channel (PRACH) transmissions, namely, multiple PRACH preamble repetitions. In multiple PRACH transmissions, multiple PRACH preambles may occupy multiple random access channel occasions (ROs) that span a relatively long time in the time domain, resulting in different timing advances for the multiple PRACH preambles. Furthermore, when multiple PRACH transmissions conflict with other uplink transmissions, transmission of part of the PRACH preambles may be dropped. Therefore, determining the uplink timing of the uplink transmission in multiple PRACH transmissions is an urgent problem to be solved.

### SUMMARY

A method and a device in a node for wireless communication are provided according to embodiments of the present disclosure. Various aspects involved in the present disclosure are described below.

In a first aspect, a method in a first node for wireless communication is provided. The method includes: transmitting at least one preamble over a first random access channel occasion (RO) set; and receiving a first random access response (RAR) within a first time window, where the first RAR includes a first timing advance command (TAC), the first RO set includes N physical random access channel (PRACH) occasions, and a last PRACH occasion among the N PRACH occasions is used for determining a start of the first time window, the at least one preamble is respectively carried on at least one PRACH occasion among the first RO set, a first preamble is one of the at least one preamble, first uplink timing is related to both the first TAC and transmission timing of the first preamble, and N is one of 2, 4, or 8.

In a second aspect, a method in a second node for wireless communication is provided. The method includes: receiving at least one preamble on a first RO set; and transmitting a first RAR within a first time window, where the first RAR includes a first TAC, the first RO set includes N PRACH occasions, a last PRACH occasion among the N PRACH occasions is used for determining a start of the first time window, the at least one preamble is respectively carried on at least one PRACH occasion among the first RO set, and a first preamble is one of the at least one preamble, first uplink timing is related to both the first TAC and transmission timing of the first preamble, and N is one of 2, 4, or 8.

In a third aspect, a first node for wireless communication is provided, including: a first transmitter, configured to transmit at least one preamble over a first RO set; and a first receiver, configured to receive a first RAR within a first time window, where the first RAR includes a first TAC, the first RO set includes N PRACH occasions, a last PRACH occasion among the N PRACH occasions is used for determining a start of the first time window, the at least one preamble is respectively carried on at least one PRACH occasion among the first RO set, a first preamble is one of the at least one preamble, first uplink timing is related to both the first TAC and transmission timing of the first preamble, and N is one of 2, 4, or 8.

In a fourth aspect, a second node for wireless communication is provided, including: a second receiver, configured to receive at least one preamble over a first RO set, and a second transmitter, configured to transmit a first RAR within a first time window, where the first RAR includes a first TAC, the first RO set includes N PRACH occasions, a last PRACH occasion among the N PRACH occasions is used for determining a start of the first time window, the at least one preamble is respectively carried on at least one PRACH occasion among the first RO set, a first preamble is one of the at least one preamble, first uplink timing is related to both the first TAC and transmission timing of the first preamble, and N is one of 2, 4, or 8.

In a fifth aspect, a first node for wireless communication is provided, including: a transceiver, a memory, and a processor; where the memory is configured to store a program, and the processor is configured to call the program in the memory and control the transceiver to receive or transmit a signal, to cause the first node to implement the method in the first aspect.

In a sixth aspect, a second node for wireless communication is provided, including: a transceiver, a memory, and a processor, where the memory is configured to store a program, and the processor is configured to call the program in the memory, and control the transceiver to receive or transmit a signal, to cause the second node to implement the method in the second aspect.

In a seventh aspect, a communication system is provided according to an embodiment of the present disclosure. The system includes the first node and/or the second node. In other implementations, the system may further include another device that interacts with the first node or the second node in the solution provided in the embodiments of the present disclosure.

In an eighth aspect, a computer readable storage medium is provided according to an embodiment of the present disclosure. The computer readable storage medium stores a computer program, and the computer program causes the computer to implement some or all operations in the methods in the foregoing aspects.

In a ninth aspect, a computer program product is provided according to an embodiment of the present disclosure. The computer program product includes a non-transitory computer readable storage medium that stores a computer program. The computer program is operable to cause the computer to implement some or all of the operations in the methods in the foregoing aspects. In some implementations, the computer program product may be a software installation package.

In a tenth aspect, a chip is provided according to an embodiment of the present disclosure. The chip includes a memory and a processor. The processor is configured to call and run a computer program from the memory, to implement some or all of the operations in the methods in the foregoing aspects.

In the embodiments of the present disclosure, the first uplink timing at which the first node performs uplink transmission is related to the first TAC and transmission timing of the first preamble. The first preamble is a preamble related to the first TAC among the at least one preamble transmitted by the first node. It can be seen that the first node can reasonably determine uplink timing of uplink transmission based on the multiple PRACH transmissions.

In the embodiments of the present disclosure, after receiving the at least one preamble, the second node determines the first TAC according to the transmission timing of the first preamble, so as to effectively indicate the TAC. Further, the first node may determine the first preamble according to a configuration or an indication from the second node, so as to effectively indicate a timing reference of the TAC.

In the embodiments of the present disclosure, at least one preamble transmitted by the first node corresponds to remaining PRACH transmissions after one or more PRACH transmissions are dropped in the multiple PRACH transmissions. Therefore, even if one or more PRACH transmissions in the multiple PRACH transmissions are dropped, the first preamble used for the timing reference can still be effectively indicated.

In the embodiments of the present disclosure, the first node can determine the first preamble related to the first TAC, thereby determining the first uplink timing after the multiple PRACH transmissions based on the first TAC and the first preamble. This not only helps improve the performance gain of the multiple PRACH transmissions and increase coverage, but also helps reduce random access delay and enhance utilization of random access resources.

### BRIEF DESCRIPTION OF THE DRAWINGS

FIG. 1 is a schematic diagram illustrating a system architecture of a wireless communication system that be applied to the embodiments of the present disclosure.
FIG. 2 is a schematic diagram illustrating a situation where the transmission timing changes in multiple PRACH transmissions.
FIG. 3 is a schematic diagram illustrating another situation where the transmission timing changes in multiple PRACH transmissions.
FIG. 4 is a flowchart of a method in a first node for wireless communication according to an embodiment of the present disclosure.
FIG. 5 is a schematic diagram of several preamble formats that may correspond to at least one preamble in the method as shown in FIG. 4.
FIG. 6 is a schematic diagram of a possible implementation of operation S410 in the method as shown in FIG. 4.
FIG. 7 is a flowchart of a possible implementation of the method shown in FIG. 4.
FIG. 8 is a flowchart of a possible implementation of operation S730 in the method as shown in FIG. 7.
FIG. 9 is a schematic diagram of a possible configuration for multiple time-frequency resources.
FIG. 10 is a flowchart of another possible implementation of the method shown in FIG. 4.
FIG. 11 is a structural diagram of a first node for wireless communication according to an embodiment of the present disclosure.
FIG. 12 is a structural diagram of a second node for wireless communication according to an embodiment of the present disclosure.
FIG. 13 is a schematic structural diagram of a device according to an embodiment of the present disclosure.
FIG. 14 is a schematic diagram illustrating hardware modules of a communication device according to an embodiment of the present disclosure.

### DETAILED DESCRIPTION OF THE EMBODIMENTS

### Communication system Architecture

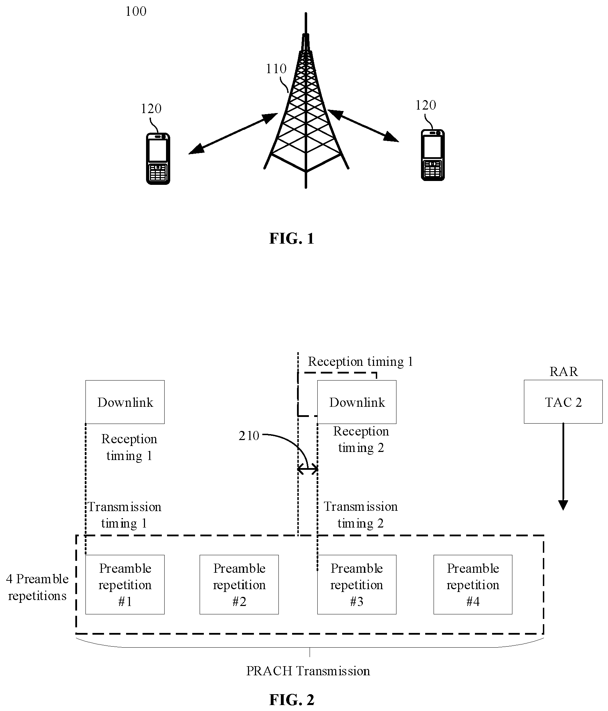

FIG. 1 is a schematic diagram illustrating a system architecture of a wireless communication system 100 that be applied to the embodiments of the present disclosure. The wireless communication system 100 may include a network device 110 and user equipment (UE) 120. The network device 110 can communicate with the user equipment 120. The network device 110 can provide communication coverage for a specific geographical area and can communicate with the user equipment 120 located within this coverage.

FIG. 1 exemplary illustrates one network device and two user equipment. Optionally, the wireless communication system 100 may include multiple network devices, and each network device may provide coverage including other numbers of user equipment. The embodiments of the present disclosure are not limited in this regard.

Optionally, the wireless communication system 100 may also include other network entities, such as a network controller, and a mobility management entity. The embodiments of the present disclosure are not limited in this regard.

It should be understood that the technical solutions of the embodiments of the present disclosure can be applied to various communication systems, such as a fifth-generation (5G) system or NR system, a long term evolution (LTE) system, an LTE frequency division duplex (FDD) system, and an LTE time division duplex (TDD) system. The technical solutions in the present disclosure may also be applied to future communication systems, such as a sixth-generation (6G) mobile communication system and a satellite communication system.

In the embodiments of the present disclosure, the user equipment (UE) may also be referred to as a terminal device, access terminal, user unit, user station, mobile station (MS), mobile terminal (MT), remote station, remote terminal, mobile device, user terminal, terminal, wireless communication device, user agent, or user device. The user equipment in the embodiments of the present disclosure may refer to a device that provides voice and/or data connectivity to users, and may be used to connect people, things, and machines, such as handheld devices or in-vehicle devices with wireless connectivity. The user equipment in the embodiments of the present disclosure may be a mobile phone, tablet computer (pad), laptop computer, PDA, mobile internet device (MID), wearable device, virtual reality (VR) device, augmented reality (AR) device, wireless terminal in industrial control, wireless terminal in self-driving applications, wireless terminal in remote medical surgery, wireless terminal in smart grid systems, wireless terminal in transportation safety systems, wireless terminal in smart cities, wireless terminal in smart homes, and so on. Optionally, the UE may serve as a base station. For example, the UE may act as a scheduling entity that provides sidelink signals between UEs in V2X or D2D communication. For instance, a mobile phone and a car may communicate with each other using sidelink signals. A mobile phone and a smart home device may communicate without relaying communication signals by a base station.

In the embodiments of the present disclosure, the network device may be a device for communicating with user equipment. The network device may also be referred to as an access network device or a radio access network (RAN) device, such as a base station. The network device in the embodiments of the present disclosure may refer to a RAN node (or device) that connects the user equipment to a wireless network. The term "base station" may broadly cover, or be replaced with, various terms including but not limited to: NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, and the like. The base station may be a macro base station, micro base station, relay node, donor node, or similar device, or a combination thereof. The base station may also refer to a communication module, modem, or chip provided within the above-mentioned apparatus or device. The base station may further be a mobile switching center, or a device performing base station functions in device-to-device (D2D), vehicle-to-everything (V2X) or machine-to-machine (M2M) communication, a network-side device in a 6G network, or a device that performs base station functions in future communication systems. The base station may support networks with the same or different access technologies. The embodiments of the present disclosure are not limited to any specific technology or physical form of the network device.

The base station may be stationary or mobile. For example, a helicopter or unmanned aerial vehicle (UAV) may be configured to serve as a mobile base station, and one or more cells may move according to the location of the mobile base station. In other examples, a helicopter or UAV may be configured to operate as a device that communicates with another base station.

In some deployments, the network device in the embodiments of the present disclosure may refer to a CU or DU, or the network device may include both a CU and a DU. A gNB may also include an AAU.

The network device and the user equipment may be deployed on land, indoors or outdoors, either handheld or vehicle-mounted. The network device and the user equipment may be deployed on water surfaces, or deployed in the air, e.g., on aircraft, balloons, or satellites. The embodiments of the present disclosure are not limited by the deployment scenarios of the network device and the user equipment.

It should be understood that all or part of the functions of the communication devices in the present disclosure may be implemented by software running on hardware, or by virtualized functions instantiated on a platform, such as a cloud platform.

It should also be understood that the interpretation of the terminology in the embodiments of the present disclosure may refer to the specifications of the 3rd generation partnership project (3GPP), such as the TS 36 series, TS 37 series, and TS 38 series, and may also refer to the specifications of the institute of electrical and electronics engineers (IEEE).

### Coverage Enhancement for PRACH Transmission

The coverage performance of a communication system (e.g., an NR system) is an important factor that operators must consider when commercially deploying communication networks. This is because the coverage performance of the communication system directly affects the service quality of the communication system, as well as the costs including capital expenditure (CAPEX) and operating expense (OPEX).

The coverage performance of a communication system may vary depending on the operating frequency band of the system. For example, compared with an LTE system, an NR system can operate at higher frequency bands (e.g., millimeter-wave bands), which results in greater path loss. Consequently, the coverage performance of the NR system is relatively poorer at higher frequency bands. Therefore, as communication systems increasingly support higher frequency bands, how to enhance the coverage of the communication system becomes a problem that needs to be solved.

In most practical deployment scenarios, the uplink (UL) coverage performance is the bottleneck for enhancing the coverage of a communication system, since the capability of user equipment is generally weaker than that of the network device. With the advancement of communication technologies, uplink traffic (service) is gradually increasing in some emerging vertical use cases, such as video uploading services. In scenarios with heavy uplink traffic, how to enhance uplink coverage remains a problem that needs to be further solved.

In related technologies, some coverage enhancement solutions for the uplink have already been proposed. For example, Release 17 (Rel-17) of NR has introduced coverage enhancement mechanisms for the physical uplink shared channel (PUSCH), the physical uplink control channel (PUCCH), and message 3 (Msg3) in the random access procedure.

However, Rel-17 does not include any coverage enhancement solutions specifically designed for PRACH, even though PRACH transmission performance is critical for many procedures such as initial access and beam failure recovery. Therefore, enhancing PRACH coverage is also of significant importance. Based on this, 3GPP officially launched the work item (WI) titled "further NR coverage enhancements" in NR Rel-18 through proposal RP-221858, in which improving the coverage performance of PRACH transmission is one of the key topics.

In a possible implementation, coverage enhancement for PRACH transmission can be achieved through multiple PRACH transmissions. In other words, the performance gain in PRACH transmission can be obtained by PRACH preamble repetitions (e.g., by sending multiple preambles on different ROs). For example, transmitting multiple PRACH preamble repetitions using the same beam will be introduced in NR Release 18 (Rel-18).

To achieve coverage enhancement for PRACH transmission, the 3GPP radio access network (RAN) 1#110bis-e meeting agreed to use multiple PRACH transmissions with the same beam in a single random access channel (RACH) attempt (one RACH attempt) to obtain the performance gain. The RAN 1#110bis-e meeting also supported the use of the same PRACH preamble in multiple ROs within the multiple PRACH transmissions, where ROs located at different time instances can be used for multiple PRACH transmissions.

Furthermore, the 3GPP RAN1#112 meeting agreed to introduce a random access channel occasion group (RACH occasion group, RO group, ROG) for multiple PRACH transmissions. All ROs within one ROG are associated with the same synchronization signal/physical broadcast channel block(s) (SS/PBCH block(s), SSB(s)). Additionally, the number of PRACH transmissions in multiple PRACH transmissions using the same beam is supported for 2, 4, or 8 transmissions.

Furthermore, the 3GPP RAN1#112bis-e meeting agreed that multiple PRACH transmissions in one RACH attempt will operate within only one ROG. The number of PRACH transmissions in the multiple PRACH transmissions is set to be one or more values, and the number of valid ROs in one ROG equals one of these set values. In other words, a size of an ROG (ROG size) is one of 2 ROs, 4 ROs, or 8 ROs, depending on the set value for the number of PRACH transmissions in the multiple PRACH transmissions.

Furthermore, the 3GPP RAN1#113 meeting agreed that a ROG is configured or determined within a time period X, and the configured or determined ROG is repeated in time period X, which includes K SSB-to-RO association pattern periods. Additionally, if one or more PRACH transmissions in a multiple PRACH transmissions for one RACH attempt are dropped, the dropped PRACH transmissions will not be retransmitted.

For traditional single PRACH transmission, when multiple uplink transmissions overlap in the time domain, the power allocated by the UE to multiple uplink transmissions in a single transmission occasion may exceed its maximum transmit power. To resolve uplink transmission conflicts, the UE may either abandon PRACH transmission or reduce the transmission power of PRACH during that transmission occasion. The multiple uplink transmissions include at least two of PUSCH, PUCCH, PRACH, or sounding reference signal (SRS).

In practical communication, there are various scenarios that may lead to uplink transmission conflicts. For example, a dual connectivity scenario may cause power allocation to exceed the limit. Additionally, slot format determination may also result in conflicts between multiple uplink transmissions. Furthermore, if the transmission occasions of PUSCH, PUCCH, PRACH, or SRS overlap within the same slot, uplink transmission conflicts may occur. Another case is when the gap between PRACH transmission and PUSCH, PUCCH, or SRS transmission is too short, which can also lead to uplink transmission conflicts.

For multiple PRACH transmissions, since the ROG occupied by one RACH attempt includes multiple ROs, especially in cases where one ROG includes up to 8 ROs, the probability of a conflict between multiple PRACH transmissions and other uplink transmissions is significantly increased. Furthermore, one RACH attempt may conflict with multiple other uplink transmissions. According to the agreements reached at the 3GPP RAN1#113 meeting, when multiple PRACH transmissions frequently conflicts with other uplink transmissions, the UE may drop all or some of the PRACH transmissions.

### Uplink Timing

In a communication system, a UE may modify the uplink timing for its uplink transmission upon receiving a TAC or downlink transmission. For example, in an NR system, if a downlink timing received by a UE changes, the UE may modify the timing advance for its uplink transmission accordingly. For another example, if a UE receives a TAC for a timing advance group (TAG), the UE may modify the timing advance for its uplink transmissions based on the received TAC.

In some embodiments, after the UE transmits a PRACH preamble to a base station (e.g., eNB or gNB) via PRACH, the base station may determine the corresponding TAC for the UE based on the transmission timing for the PRACH or the preamble. For example, the base station may send an RAR based on the received PRACH preamble. The RAR includes a TAC to indicate to the UE the required timing advance for uplink transmission.

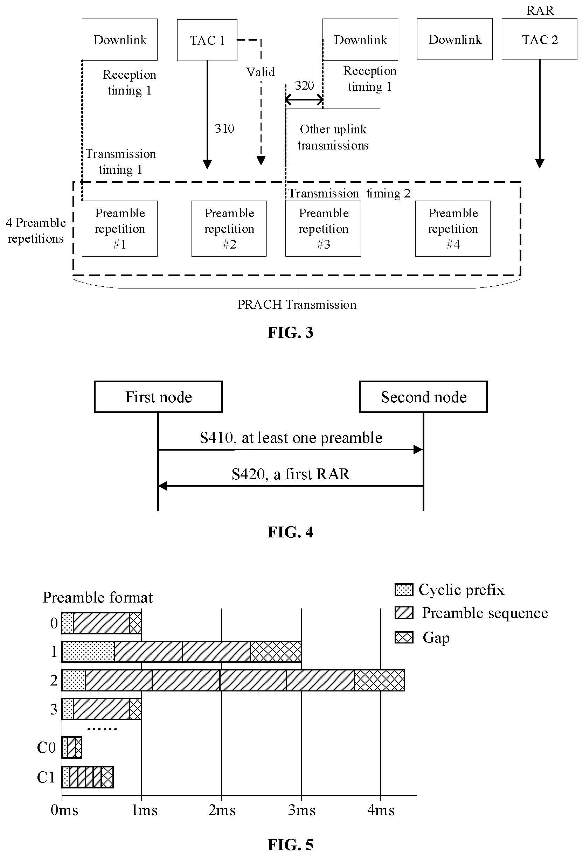

For ease of understanding, multiple PRACH transmissions are taken as an example below to provide an illustrative explanation of two scenarios involving modifying uplink transmission timing, with reference to FIG. 2 and FIG. 3. In both FIG. 2 and FIG. 3, the multiple PRACH transmissions include four preamble repetitions, namely, from preamble repetition #1 to preamble repetition #4. These four preamble repetitions correspond to the same timing advance (TA).

Referring to FIG. 2, the transmission timing (tx timing) of any preamble repetition sent by the UE can be determined based on the downlink reception timing (rx timing). For example, the transmission timing 1 of the preamble repetition #1 with the same as the downlink reception timing 1.

However, when the downlink timing changes, time interval 210 in FIG. 2 is the time offset between the original downlink timing and the actual downlink timing. Due to this offset, the downlink timing received by the UE changes from the reception timing 1 to the reception timing 2. In this scenario, the uplink timing at which the UE transmits the preamble repetition #3 is changed from the transmission timing 1 to the transmission timing 2.

FIG. 2 illustrates a scenario in which the transmission timing changes due to a change in the downlink timing received by the UE. FIG. 3 illustrates a scenario in which the transmission timing changes upon the UE receiving a TAC.

In contrast to FIG. 2, the UE in FIG. 3 receives a valid TAC1 during PRACH transmission. The information 310 indicated by TAC1 may include a new TA or a TA offset. The information 310 can be used to determine the time offset between the transmission timing and the downlink reception timing, i.e., time interval 320. When the information 310 indicates a new TA, the time interval 320 equals the new TA. When the information 310 indicates a TA offset, the time interval 320 is a sum of the original TA and the offset.

As shown in FIG. 3, after receiving TAC1, the uplink timing for the UE to transmit the preamble repetition #3 is changed from the transmission timing 1 to the transmission timing 2. The transmission timing 2 is no longer the same as the downlink reception timing 1.

The above description, with reference to FIG. 2 and FIG. 3, illustrates two scenarios in which the transmission timing changes during multiple PRACH transmissions. In both FIG. 2 and FIG. 3, if there is no change in the downlink timing or no TAC is received, the four preamble repetitions are transmitted using the same TA for uplink transmission.

However, the duration of multiple PRACH transmissions is typically longer. For example, multiple PRACH transmissions occupying up to eight ROs last significantly longer than a single PRACH transmission. In particular, when ROs within a ROG are non-contiguous in time, the time span across the ROG becomes very long. For a moving UE, the propagation delay may change during the time span of such a ROG. In this case, the multiple PRACH transmissions sent by the UE may be based on different timing advances.

In multiple PRACH transmissions, since the UE may apply different timing advances for different PRACHs, if the design of related systems is followed,, the UE cannot determine which PRACH preamble the TAC indicated in the RAR is based on, and thus cannot perform an effective timing adjustment.

Furthermore, if a fixed RO is used as the reference for timing adjustment and the PRACH transmitted on that RO is dropped or the PRACH preamble on that RO is not detected by the base station, the base station cannot calculate the timing advance based on that PRACH preamble.

In summary, multiple PRACH transmissions can enhance the coverage of an NR system. However, in multiple PRACH transmissions, how the UE determines the timing advance for uplink transmission remains a technical problem to be solved. In particular, when multiple PRACH transmissions in such transmission are sent with different transmission timings, how the UE determines the uplink transmission timing is a pressing technical problem that needs to be solved.

Moreover, in multiple PRACH transmissions, how the network device indicates the TAC is also a technical problem to be solved. Further, how the network device indicates the TAC via an RAR, and how the network device indicates which PRACH transmission the TAC is based on, are both problems that need to be solved.

In addition, when one or more PRACH transmissions in the multiple PRACH transmissions are dropped, how the UE determines the timing advance for uplink transmission, and how the network device indicates the reference PRACH transmission for the TAC, are pressing problems that need to be solved.

It should be noted that the problem described above, i.e., the impact on the UE's determination of uplink timing due to PRACH transmissions being dropped because of uplink transmission conflicts in multiple PRACH transmissions, is merely an example. The embodiments of the present disclosure may be applied to any scenario in which the UE may drop a PRACH transmission or a PRACH transmission may fail during multiple PRACH transmissions.

To solve the above problem, a method and a device in a node for wireless communication are provided according to embodiments of the present disclosure. In this method, a first node (e.g., a UE) may determine the uplink timing for uplink transmission during multiple PRACH transmissions, and a second node (e.g., a network device) may effectively indicate the TAC and the timing reference for the TAC. As a result, while enhancing the performance gain and coverage of the multiple PRACH transmissions, the proposed solution also reduces random access delay and improves the utilization of random access resources.

Embodiments of the present disclosure can be applied to retransmission scenarios in which multiple PRACH transmissions are performed during an initial RACH attempt. In multiple retransmissions of the RACH attempt, this scenario may adopt multiple PRACH repetitions to achieve coverage enhancement for the PRACH.

In some embodiments, the multiple PRACH transmissions described in the present disclosure may refer to multiple PRACH transmissions using the same beam, in which multiple PRACH transmissions are performed over the same beam to obtain a signal-to-noise ratio gain. In some embodiments, the multiple PRACH transmissions may refer to multiple PRACH transmissions using different beams, in which multiple PRACH transmissions are performed over different beams to obtain a diversity gain.

It should be noted that in the embodiments of the present disclosure the beam may be referred to, or be replaced with, at least one of the following: a physical beam, a logical beam, a spatial filter, a spatial parameter, a spatial domain filter, a spatial domain transmission filter, a spatial domain reception filter, or an antenna port.

The embodiments of the present disclosure may be applied to an initial access procedure or a beam failure recovery procedure. Taking the initial access procedure as an example, the embodiments of the present disclosure may be applied to a four-step random access procedure (i.e., random access procedure Type 1), or to a two-step random access procedure (i.e., random access procedure Type 2), without being limited thereto.

The following provides a detailed description of the method embodiments of the present disclosure with reference to the accompanying drawings. FIG. 4 is a flowchart illustrating a method for wireless communication at a first node according to an embodiment of the present disclosure. As shown in FIG. 4, the method may be used for interaction between the first node and a second node.

In an embodiment, the first node may be a network-controlled repeater (NCR).

In an embodiment, the first node may be user equipment (UE), e.g., the user equipment 120 shown in FIG. 1.

In an embodiment, the first node may be a relay, such as a relay terminal.

In an embodiment, the second node may be a network device, e.g., the network device 110 shown in FIG. 1.

The method shown in FIG. 4 includes operations S410 and S420, which are described below.

In S410, the first node transmits at least one preamble to the second node.

The first node may transmit the preamble during a random access procedure (also referred to as a random access process), or during beam management or other PRACH transmission. This is not limited herein.

By way of example, the at least one preamble transmitted by the first node may be a random access preamble transmitted in the current random access procedure. The random access procedure may include one or more RACH attempts performed by the first node based on multiple PRACH transmissions.

In an embodiment, any of the at least one preamble transmitted by the first node may be replaced with one of: a preamble repetition, a PRACH preamble, a random access preamble, or a preamble format.

In an embodiment, the at least one preamble transmitted by the first node may be the same or may be different.

In some embodiments, the first node may perform multiple PRACH transmissions by transmitting at least one preamble. By way of example, the transmission of at least one preamble by the first node may alternatively be expressed as the first node transmitting at least one PRACH. By way of example, the transmission of at least one preamble by the first node may indicate that the first node performs multiple PRACH transmissions in one RACH attempt. By way of example, the transmission of at least one preamble by the first node may indicate that the first node transmits one or more preambles in one multiple PRACH transmission.

In an embodiment, the at least one preamble transmitted by the first node may be any one or more of the four preamble repetitions shown in FIG. 2 or FIG. 3.

In an embodiment, the at least one preamble is used for a first PRACH transmission, where the first PRACH transmission includes M preamble repetitions. For example, the first PRACH transmission may correspond to the PRACH transmission shown in FIG. 2 or FIG. 3. In FIG. 2 or FIG. 3, the PRACH transmission includes four preamble repetitions.

In an embodiment, the first PRACH transmission is configured with M preamble repetitions.

In an embodiment, M may be one of 2, 4, or 8.

In an embodiment, M may be any positive integer less than or equal to 8.

In an embodiment, one or more of the M preamble repetitions may be dropped.

In an embodiment, the first PRACH transmission is multiple PRACH transmissions, which may alternatively be referred to as a PRACH transmission including M preamble repetitions.

The first node transmits at least one preamble on a first RO set. The time-domain resources corresponding to the first RO set are for transmitting the at least one preamble. For example, the UE may perform multiple PRACH transmissions over multiple ROs within one ROG.

In the embodiments of the present disclosure, the RO set may include, or be alternatively referred to as, at least one of the following: a ROG, a physical random access channel occasion group (PRACH occasion group), a PRACH occasion set, or a PRACH transmission occasion group.

In an embodiment, the first RO set may alternatively be referred to as a first PRACH occasion group.

In another embodiment, the first RO set may alternatively be referred to as a first PRACH occasion set.

In another embodiment, the first RO set may alternatively be referred to as a first PRACH transmission occasion set.

The first RO set may include N PRACH occasions. The N PRACH occasions may be used for transmitting N preambles or N PRACHs, where N is one of 2, 4, or 8.

In the embodiments of the present disclosure, a PRACH occasion may include, or be alternatively referred to as, at least one of the following: a RO or a PRACH transmission occasion.

In an embodiment, the N PRACH occasions may alternatively be referred to as N ROs.

In another embodiment, the N PRACH occasions may alternatively be referred to as N PRACH transmission occasions.

In an embodiment, N is the number of all PRACH occasions included in the first RO set.

In an embodiment, N is configured by a higher layer.

In another embodiment, N is determined by the first node itself. By way of example, the first node may determine the value of N based on service priority. When the service priority is relatively high, N may be 4 or 8.

In an embodiment, the first PRACH transmission is configured with M preamble repetitions, and M is less than or equal to N.

In an embodiment, the N PRACH occasions are orthogonal in the time-frequency domain.

In another embodiment, the N PRACH occasions are continuous in the time domain and share the same frequency domain resources.

In some embodiments, the first node may transmit the at least one preamble via at least one PRACH occasion in the first RO set. The at least one preamble transmitted by the first node is respectively carried on at least one PRACH occasion in the first RO set.

In an embodiment, all of the PRACH occasions included in the first RO set are valid. A PRACH occasion being valid means that the time-domain resources corresponding to the PRACH occasion can be used for PRACH transmission.

In an embodiment, the at least one PRACH occasion is configured to transmit the at least one preamble. For example, when the first node transmits Q preambles (1 < Q < N), the Q preambles can be transmitted on any Q PRACH occasions in the first RO set, with each preamble corresponding to one PRACH occasion.

In an embodiment, the at least one preamble corresponds one-to-one with at least one PRACH occasion in the first RO set.

In an embodiment, any preamble in the at least one preamble occupies one PRACH occasion of the N PRACH occasions included in the first RO set.

In an embodiment, the at least one preamble includes multiple preambles, and any preamble in the multiple preambles occupies one of the N PRACH occasions included in the first RO set.

In an embodiment, the at least one preamble includes multiple preambles, with each of the multiple preambles being transmitted on a respective PRACH occasion in the first RO set.

In some embodiments, the at least one preamble is at least one preamble format. For example, when the first node transmits multiple preambles, the multiple preambles correspond to multiple different preamble formats. For another example, when the first node transmits multiple preambles, at least two of the multiple preambles correspond to different preamble formats. For instance, one (preamble 1) of the multiple preambles may use a preamble format that includes multiple sequences, while another preamble (preamble 2) may use a preamble format that includes a single sequence.

In an embodiment, any preamble in the at least one preamble corresponds to a preamble format.

In another embodiment, any preamble in the at least one preamble includes one preamble format.

In another embodiment, any preamble in the at least one preamble is a preamble format.

In an embodiment, the at least one preamble includes multiple preambles, and any two of the multiple preambles use the same preamble format.

In another embodiment, the at least one preamble includes multiple preambles, and at least two of the multiple preambles use different preamble formats.

It should be noted that any preamble in at least one of the preambles may correspond to any existing or future preamble format, and no specific limitations are imposed here.

For ease of understanding, the preamble formats corresponding to the preambles transmitted by the first node are exemplarily explained below with reference to the various preamble formats shown in FIG. 5, which only shows a subset of preamble formats for comparison purposes. It should be understood that the preamble formats shown in FIG. 5 are merely examples and do not limit the preamble formats that may correspond to the multiple preambles transmitted by the first node.

The preamble formats shown in FIG. 5 include formats 0 to 3, as well as formats C0 and C1. From FIG. 5, it can be seen that there are other preamble formats between formats 3 and C0.

With reference to FIG. 5, the preamble format mainly includes a cyclic prefix (CP) located at the front, a sequence (SEQ) located in the middle, and a gap (GP) located at the end. All preamble formats each include one CP and n SEQs, while some formats may exclude the GP.

From FIG. 5, it can be seen that the number n of SEQs can be 1, as in formats 0 and C0. The value of n may also be other integers greater than 1. For example, in FIG. 5, the format 1 has n equal to 2, while formats 2, 3, and C1 have n equal to 4. It should be understood that n may also take other values not shown in FIG. 5.

Still with reference to FIG. 5, different preamble formats have different time durations. For instance, formats 0 and 3 last 1ms, the format 1 lasts 3ms, the format 2 lasts longer than 4ms, and formats C0 and C1 last less than 1ms. Due to the different total durations and values of n, the durations of CP, SEQ, and GP also vary accordingly.

In S210, any preamble in at least one of the preambles transmitted by the first node may correspond to any of the preamble formats shown in FIG. 5, or to another preamble format.

In some embodiments, at least two PRACH occasions in the first RO set are different. That is, when the first node transmits preambles or PRACH on the first RO set, the transmission timings of at least two preambles or at least two PRACHs are different. As mentioned earlier, in the case of multiple PRACH transmissions, due to the different transmission timings of different PRACHs or preambles, the first node needs to know transmission timing of PRACH or preamble on which the TAC fed back by the second node is based.

In an embodiment, when the first node transmits two preambles on the first RO set, the transmission timings of the two preambles are different.

In another embodiment, the at least one preamble may include a first preamble and a second preamble, where the transmission timing of the second preamble differs from that of the first preamble.

In some embodiments, the number of preambles transmitted by the first node is less than or equal to the number of PRACH occasions in the first RO set. In other words, the number of preambles included in the at least one preamble is less than or equal to N. By way of example, the number of preambles included in the at least one preamble transmitted by the first node is less than N. For instance, when N is 4, if the four preambles transmitted by the first node conflict with other uplink transmissions, the first node may drop one or more of the preambles that experience transmission conflict. By way of example, the number of preambles included in the at least one preamble transmitted by the first node is equal to N. For instance, when N is 4, the first node transmits four preambles. By way of example, when multiple uplink transmissions conflict, the first node may drop one or more PRACH transmissions (preambles) based on a transmission priority rule.

In an embodiment, when the transmission priority of a preamble is higher than that of the conflicting uplink transmission, the first node may continue to transmit the preamble.

In an embodiment, when the transmission priority of a preamble is equal to or lower than that of the conflicting uplink transmission, the first node may drop the transmission of the preamble.

When the first node drops one or more preambles, or when the second node detects that the number of preambles it receives is less than the number of preambles actually transmitted by the first node, the first node still needs to know which preamble the second node used to determine the TAC.

Correspondingly, the second node receives the at least one preamble on the first RO set. The number of preambles received by the second node is less than or equal to the number of preambles transmitted by the first node. In some embodiments, when transmitting at least one preamble, the first node may drop one or more preambles due to uplink transmission conflicts. In other embodiments, the second node may fail to detect a preamble transmitted by the first node.

By way of example, the second node detects one or more preambles on the N PRACH occasions in the first RO set.

In an embodiment, the second node detects one or more PRACH preambles on multiple ROs within one ROG.

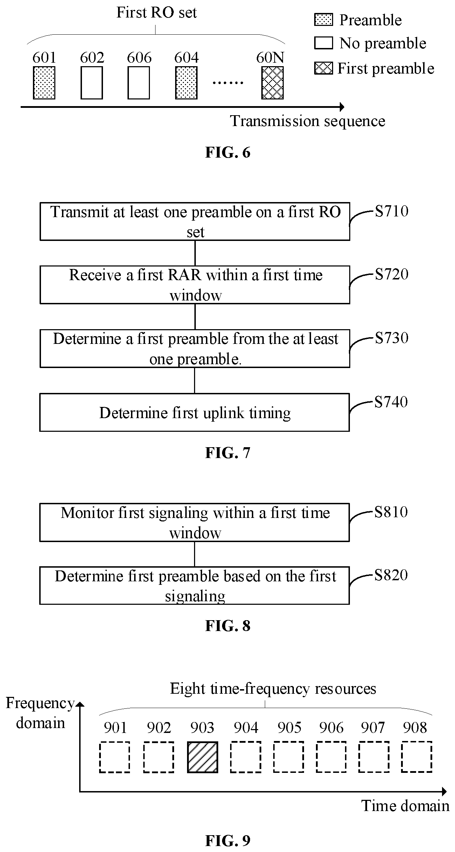

For ease of understanding, an exemplary description of the solution in which the first node transmits at least one preamble on the first RO set is provided below with reference to FIG. 6.

With reference to FIG. 6, the first RO set includes N PRACH occasions, denoted as an occasion 601, an occasion 602, ..., and an occasion 60N. The first node may transmit N preambles through the N PRACH occasions in sequence.

As shown in FIG. 6, preambles are transmitted on the occasion 601, the occasion 604, and the occasion 60N, while the occasion 602 and the occasion 603 are not used for preamble transmission. There may be uplink transmission conflicts on the occasion 602 and the occasion 603, resulting in the first node dropping the preambles corresponding to these two occasions.

As can be seen from FIG. 6, the number of preambles transmitted by the first node on the first RO set is less than N. Furthermore, when receiving preambles on the first RO set, the second node may receive six preambles transmitted on the occasion 601, the occasion 604, and the occasion 60N, or may fail to detect one or more of the preambles transmitted on the occasion 601, the occasion 604, and the occasion 60N.

Still with reference to FIG. 4, in S420, the second node transmits a first RAR to the first node. As described above, RAR refers to random access response, and the first RAR is the first random access response.

In an embodiment, the first RAR may be the RAR carrying TAC2 as shown in FIG. 2 or FIG. 3.

The first node may receive the first RAR within a first time window.

The first time window may be a window during which the first node monitors for a corresponding RAR after transmitting the at least one preamble in S410. The first time window may also be referred to as an RAR window.

In some embodiments, the start time of the first time window is related to the at least one preamble transmitted by the first node. By way of example, when the first node performs multiple PRACH transmissions, the start time of the first time window is determined based on the last PRACH transmission in the multiple PRACH transmissions.

In an embodiment, the transmission timing of the last preamble among the at least one preamble is used for determining the start time of the first time window. In other words, the first node starts the first time window after transmitting the last preamble among the at least one preamble, and monitors the RAR within the first time window.

In an embodiment, a media access control (MAC) entity may start the first time window at the first physical downlink control channel (PDCCH) occasion after the end of the last preamble transmission.

In an embodiment, the end time of the multiple PRACH transmissions corresponding to the at least one preamble is used for determining the start time of the first time window.

In some embodiments, the N PRACH occasions in the first RO set are used for determining the start time of the first time window. By way of example, the last PRACH occasion among the N PRACH occasions is used for determining the start time of the first time window. For instance, the end time of the last PRACH occasion serves as the start time of the first time window.

The first node may receive the first RAR in various ways, with no specific limitation here.

In some embodiments, the first node may perform full detection within the first time window to receive the first RAR.

In some embodiments, the second node may indicate to the first node the time-frequency resources occupied by the first RAR, so that the first node can receive the first RAR in a timely manner, thus improving communication efficiency.

In some embodiments, the second node may transmit first signaling to the first node. The first signaling may indicate the first RAR. For example, the first signaling may indicate the time-frequency resources occupied by the first RAR.

By way of example, the first node may monitor the first signaling within the first time window. When detecting the first signaling, the first node may determine the time-frequency resources of the first RAR based on the indication of the first signaling, thereby receiving the first RAR.

In an embodiment, the first signaling is downlink control information (DCI).

In an embodiment, control signaling for the first random access response is transmitted on the PDCCH.

In an embodiment, the first signaling includes DCI format 1_0.

In an embodiment, a cyclic redundancy check (CRC) of the first signaling is scrambled by a radio network temporary identifier (RNTI).

In another embodiment, the CRC of the first signaling is scrambled by a cell radio network temporary identifier (C-RNTI).

In another embodiment, the CRC of the first signaling is scrambled by a random access radio network temporary identifier (random access RNTI, RA-RNTI).

By way of example, the first signaling indicates the first RAR, which may alternatively be described as the first signaling schedules the first RAR.

In an embodiment, the first signaling is configured to schedule the first physical downlink shared channel (PDSCH), where the first PDSCH is configured to carry the first RAR.

In an embodiment, the first signaling may also include other information. Further exemplary descriptions of the other information in the first signaling will be provided in conjunction with the determination of the first preamble.

The first RAR is the response transmitted by the second node based on one or more received preambles. The first RAR may include various types of information. For example, the first RAR may include a first TAC. As described above, TAC refers to timing advance command, and the first TAC is a first timing advance command.

In an embodiment, the first TAC may be TAC2 as shown in FIG. 2 or FIG. 3.

In some embodiments, the second node may determine the first TAC corresponding to the first node based on the received at least one preamble, and transmit the determined first TAC to the first node via the first RAR.

By way of example, the first RAR may also include a first uplink grant, so that the first node may determine the time-frequency resources for uplink transmission. Further details on uplink transmission will be provided later.

By way of example, the first RAR may also include the preamble or PRACH transmission used for determining the first TAC, so that the first node can determine uplink transmission timing.

In some embodiments, the second node may determine the first TAC based on any of the received one or more preambles. The preamble related to the first TAC is referred to as the first preamble. The first preamble may also be referred to as the reference preamble.

By way of example, the first preamble is used for determining the first TAC.

By way of example, the transmission or reception timing of the first preamble is related to the downlink timing received by the first node, and the transmission timing of this downlink transmission may be used for determining the first TAC.

By way of example, the reception timing of the first preamble is used for determining the first TAC. For instance, the second node may calculate the first TAC based on the reception timing of the first preamble.

In an embodiment, the reception timing of the first preamble is used by the second node to determine the first TAC.

In an embodiment, the reception timing of the first preamble is used by a receiver of the first preamble to determine the first TAC. The receiver of the first preamble is the second node.

In an embodiment, the receiver of the first preamble includes a base station (gNB or eNB).

In an embodiment, the receiver of the first preamble includes a cell.

It should be understood that the first preamble is one of the at least one preamble transmitted by the first node. Therefore, the first node can determine the first preamble from the at least one preamble. For the second node, the first preamble is one of the at least one preamble received by the second node. Therefore, the second node can determine the first preamble from the at least one preamble received. Thus, the first preamble is one of the preambles in the intersection of the set of preambles transmitted by the first node and the set of preambles received by the second node.

In some embodiments, the PRACH occasion in the first RO set for carrying the first preamble is a first PRACH occasion. That is, the first node transmits the first preamble on the first PRACH occasion.

In an embodiment, the first preamble used by the second node to determine the first TAC is transmitted on the first PRACH occasion.

In an embodiment, the first PRACH occasion is one of the at least one PRACH occasion in the first RO set, where the at least one PRACH occasion corresponds to the at least one preamble in S210.

In an embodiment, the first RO set includes the first PRACH occasion. The first PRACH occasion may be used for transmitting the first preamble of the multiple preambles corresponding to the multiple PRACH transmissions.

By way of example, the first PRACH occasion is one of the N PRACH occasions. Among the N PRACH occasions included in the first RO set, the first PRACH occasion corresponds to the first preamble.

In some embodiments, the first PRACH occasion may be used by the first node to determine the first preamble. By way of example, the second node may indicate the first PRACH occasion to the first node to help the first node determine the corresponding first preamble.

In some embodiments, the second node may indicate the first PRACH occasion to the first node in various ways.

In an embodiment, the first RAR may indicate the first PRACH occasion.

In another embodiment, the first information may indicate the first PRACH occasion.

The first node, after determining the first preamble and the first TAC, may determine the uplink timing for uplink transmission, i.e., the first uplink timing. In some embodiments, the first uplink timing is related to both the first TAC and the transmission timing of the first preamble. In an embodiment, the first uplink timing is used for uplink transmission.

In an embodiment, the first uplink timing is used for uplink transmission.

In another embodiment, the first uplink timing is used for uplink reception.

By way of example, the first node may determine the first uplink timing based on the first TAC and the transmission timing of the first preamble.

In an embodiment, the first TAC and the transmission timing of the first preamble are jointly used to determine the first uplink timing.

In an embodiment, the first uplink timing is used by the first node for the uplink transmission.

By way of example, the first node may also determine the first uplink timing based on the first TAC and the first downlink reception timing. The first downlink reception timing may be the reception timing of the downlink transmission received by the first node. This downlink transmission is related to the transmission timing of the first preamble.

In an embodiment, the transmission timing of the first preamble is related to the first downlink reception timing, and the first TAC and the first downlink reception timing are jointly used to determine the first uplink timing. In other words, after receiving the first TAC, the first node may determine the first uplink timing based on the first TAC and the first downlink reception timing related to the first preamble.

In an embodiment, the first downlink reception timing is related to the transmission timing of the first preamble.

In an embodiment, the first downlink reception timing may be determined based on the transmission timing of the first preamble.

In an embodiment, the first downlink reception timing is used for determining the transmission timing of the first preamble.

In an embodiment, the transmission timing of the first preamble is equal to the first downlink reception timing. For example, in FIG. 2 or FIG. 3, the transmission timing 1 and the reception timing 1 of preamble repetition #1 are the same.

In an embodiment, the transmission timing of the first preamble is linearly related to the first downlink reception timing.

In some embodiments, the uplink transmission related to the first uplink timing is the uplink transmission sent by the first node to the second node after receiving the first RAR. That is, the first node may determine the timing advance for the subsequent uplink transmission based on the first TAC and the first preamble in the first RAR.

In an embodiment, the first uplink timing is used for the uplink transmission after the first RAR.

In an embodiment, the uplink transmission includes a Message 3 (Msg3). By way of example, in the random access procedure, the first node, after receiving the RAR transmitted by the second node, transmits a Message 3 for confirming the access.

In an embodiment, the uplink transmission includes PUSCH.

In another embodiment, the uplink transmission includes PUCCH.

In some embodiments, the resources for sending the uplink transmission by the first node may be determined based on the first RAR. As previously mentioned, the first RAR may also include a first uplink grant. The first uplink grant may indicate N uplink time-frequency resources. These N uplink time-frequency resources may be used for the subsequent uplink transmission by the first node.

By way of example, the first uplink grant in the first RAR may be used for the uplink transmission.

By way of example, the N uplink time-frequency resources may be in one-to-one correspondence with the N PRACH occasions included in the first RO set, to help the first node determine the resources for the uplink transmission.

In an embodiment, one of the N uplink time-frequency resources is used for transmitting Msg3.

In an embodiment, the uplink time-frequency resource indicated by the first uplink grant is the same as the uplink time-frequency resource used for transmitting a Message 3.

In an embodiment, one of the N uplink time-frequency resources is used for transmitting PUSCH.

In another embodiment, the uplink time-frequency resource indicated by the first uplink grant is different from the uplink time-frequency resource used for transmitting a Message 3.

For ease of understanding, an exemplary description of the method by which the first node determines the first uplink timing is provided below with reference to FIG. 7. The method shown in FIG. 7 can be performed by the first node, interacting with the second node.

With reference to FIG. 7, in S710, at least one preamble is transmitted on a first RO set.

In S720, a first RAR is received within a first time window.

In S730, a first preamble is determined from the at least one preamble.

In S740, first uplink timing is determined.

Correspondingly, the second node transmits the first RAR within the first time window. The second node may determine the first preamble from the at least one preamble and determine the first TAC based on the first preamble. After determining the first TAC, the second node may send the first RAR with the first TAC in the first time window.

By way of example, when the second node is a base station, the base station may calculate the first TAC based on the reception timing of the last detected PRACH preamble, and transmit the RAR within the RAR time window, where the RAR includes the first TAC.

As shown in FIG. 4 to FIG. 7, the embodiments of the present disclosure define a method for the first node to determine the first uplink timing in multiple PRACH transmissions. Through this method, the first node may determine the reference PRACH transmission in the multiple PRACH transmissions, i.e., the first preamble. The first preamble is used for determining the first TAC, so that the first node may determine the first uplink timing for the uplink transmission based on the first TAC and the first preamble. Furthermore, how the first node determines the first preamble selected by the second node is also an issue to be considered.

To address the above issue, the embodiments of the present disclosure propose two methods for determining the first preamble, to assist the first node in determining the first uplink timing in multiple PRACH transmissions. Through this method, the first node may complete operation S730 in FIG. 7.

In the first method, the first preamble may be configured by the network device. Since the uplink transmission timing of the first node is scheduled or configured by the network device, the network device may infer which one or more preambles the first node may drop due to uplink transmission conflicts. In this scenario, the network device may configure one of the preambles to be transmitted by the first node in the multiple PRACH transmissions as the timing reference for the first TAC. This configuration information may be shared with both the first node and the second node, to assist the second node in determining the first TAC and the first node in determining the first uplink timing.

In some embodiments, the first node may determine the first preamble from the at least one preamble transmitted based on the configuration information from the network device. Accordingly, the second node may also determine the first preamble configured to calculate the first TAC based on this configuration information.

By way of example, when the first node is UE, the uplink transmission of the UE is scheduled or configured by the base station. The base station may infer which one or more PRACH transmissions the UE may have dropped due to uplink transmission conflicts. Furthermore, the base station may configure one of the PRACH transmissions sent by the UE in the multiple PRACH transmissions as the timing reference for the TAC.

In some embodiments, the first preamble may be the preamble in the first position among the at least one preamble, so that the network device can indicate the first preamble to the first node and/or the second node based on information of a first position. The first position may be explicitly specified or configured.

By way of example, the first position may be the last preamble in the at least one preamble, meaning that the first preamble is the last preamble from the at least one preamble in the time domain.

In an embodiment, the first preamble is the last preamble transmitted by the first node.

In an embodiment, the first preamble is the last preamble detected by the second node.

For example, the second node calculates the first TAC based on the last detected preamble and transmits the first RAR within the first time window. The first node receives the first RAR and determines the uplink transmission timing based on the first TAC in the first RAR and the transmission timing of the last preamble in the multiple PRACH transmissions.

By way of example, the first position may be the first preamble of the at least one preamble, meaning that the first preamble is the first preamble from the at least one preamble in the time domain.

In an embodiment, the first preamble is the first preamble transmitted by the first node.

In an embodiment, the first preamble is the first preamble detected by the second node.

By way of example, the first position may be any position immediately configured by the network device. In other words, the position of the first preamble among the at least one preamble is configured.

In an embodiment, the network device configures the first preamble to be the second preamble transmitted by the first node.

In an embodiment, the network device configures the first preamble to be the second preamble detected by the second node.

By way of example, the position of the first preamble among the at least one preamble is configured, either dynamically or statically.

It should be noted that when the first node and the second node determine the first preamble based on the same position, the first preamble determined by the first node and the first preamble determined by the second node may be inconsistent, which may lead to timing adjustment errors. For example, if the last preamble transmitted by the first node is not detected by the second node, the transmission timing of the last preamble transmitted by the first node may differ from the transmission timing of the last preamble received by the second node.

In the second method, the first preamble may be directly indicated by the second node to the first node. Through this method, the first preamble used by the first node to determine the first uplink timing is consistent with the first preamble used by the second node to calculate the first TAC, thereby effectively avoiding timing adjustment errors.

In some embodiments, the first RAR may directly indicate the first preamble. That is, the first RAR includes the first preamble. The first RAR not only indicates the first TAC, but also indicates the first preamble used to calculate the first TAC, thereby facilitating the first node to determine the first uplink timing.

By way of example, when the second node calculates the first TAC based on the reception timing of the first preamble and transmits the first RAR within the first time window, the first RAR may include both the first TAC and the first preamble.

For example, the second node calculates the first TAC based on the reception timing of the last detected preamble and transmits the first RAR within the first time window. The first RAR includes the first TAC and the last detected preamble. The first node receives the first RAR and determines the first uplink timing based on the first TAC included in the first RAR and the transmission timing of the last preamble indicated in the first RAR.

In another example, when the second node determines the first TAC based on the last detected PRACH transmission, the first RAR may include the first TAC and the last PRACH transmission. It should be understood that regardless of which PRACH transmission the second node selects as the reference PRACH transmission, the first RAR indicates that reference PRACH transmission.

In some embodiments, the second node may indicate the first preamble to the first node via first signaling. As previously described, the second node may transmit the first signaling to the first node so that the first node can receive the first RAR within the first time window. Additionally, the second node may indicate the first preamble through the first signaling, so that the first node can determine the first uplink timing.

In an embodiment, the first signaling may indicate only the time-frequency resources of the first RAR. The first RAR may include the first preamble, so that the first node can determine the first preamble upon receiving the first RAR.

In an embodiment, the first signaling may indicate the time-frequency resources of the first RAR and the first preamble.

The first signaling may explicitly indicate the first preamble, or implicitly indicate the first preamble. No limitation is imposed in this regard.

For ease of understanding, an exemplary description of a method for determining the first preamble based on the first signaling is provided below with reference to FIG. 8, which illustrates a possible implementation of operation S730 in FIG. 7. The method shown in FIG. 8 is performed by the first node.

With reference to FIG. 8, in S810, the first signaling is monitored within the first time window.

In S820, the first preamble is determined based on the first signaling.

As shown in FIG. 8, the first node may acquire the first signaling by monitoring the first signaling within the first time window and determine the first preamble based on the first signaling, thereby determining the first uplink timing.

In some embodiments, the first signaling may implicitly indicate the first preamble through information related to the first preamble. By way of example, the first signaling may indicate the first PRACH occasion. As previously described, the first PRACH occasion is used for transmitting the first preamble. When the first signaling indicates the first PRACH occasion, the first node may determine the first preamble from the at least one preamble that has been transmitted.

In an embodiment, the first signaling may include a first field. The first field is used for indicating the first PRACH occasion from the N PRACH occasions included in the first RO set.

In an embodiment, the first signaling in the multiple PRACH transmissions may reuse the first signaling in a single PRACH transmission, so as to leverage existing technical solutions as much as possible.

In an embodiment, the first signaling may be a common signaling shared by both single PRACH transmission and multiple PRACH transmissions.

In an embodiment, the first signaling may schedule both a first type of RAR and a second type of RAR. That is, the first signaling schedules the first type of RAR, or, the first signaling schedules the second type of RAR. The first type of RAR may be a RAR fed back by the second node in multiple PRACH transmissions, and the second type of RAR may be a RAR fed back by the second node in the single PRACH transmission. Therefore, the first RAR belongs to the first type of RAR.

In an embodiment, the first type of RAR is for multiple PRACH transmissions, and the second type of RAR is for the single PRACH transmission.

In an embodiment, the first type of RAR is for a first type of PRACH transmission, and the second type of RAR is for a second type of PRACH transmission.

In an embodiment, the first type of PRACH transmission includes N preamble repetitions, while the second type of PRACH transmission includes only one preamble.

In an embodiment, the first type of PRACH transmission occupies N PRACH occasions, while the second type of PRACH transmission occupies only one PRACH occasion.

In an embodiment, the first field in the first signaling is shared by both the first type of RAR and the second type of RAR. For example, when the first node performs multiple PRACH transmissions, the first signaling schedules the first type of RAR, and the first field may be used for indicating the first preamble. When the first node performs a single PRACH transmission, the first signaling schedules the second type of RAR, and the first field no longer indicates the first preamble.

As an example, when the first node performs the single PRACH transmission, the first field may follow conventional techniques.

In an embodiment, when the first signaling schedules the first type of RAR, the first field indicates the first PRACH occasion. When the first signaling schedules the second type of RAR, the first field is a reserved bit, or the first field is one of multiple first-type fields included in the first signaling.

In an embodiment, the multiple first-type fields include at least one of: frequency domain resource assignment, time domain resource assignment, or PRACH mask index.

In an embodiment, any of the first-type fields is a field in the first signaling other than the reserved bit field.

As previously described, the first signaling may indicate the time-frequency resources occupied by the first RAR. These time-frequency resources may also be indicated by the first field.

By way of example, the first field may be at least one of the frequency domain resource assignment and the time domain resource assignment. The second node may indicate the time domain resource, frequency domain resource, or time-frequency resource corresponding to the first RAR via the first field.

In an embodiment, the first field may indicate one of the N downlink time-frequency resources. That is, the second node may configure N downlink time-frequency resources, while the first field only indicates the time-frequency resource used for transmitting the first RAR.

In an embodiment, the downlink time-frequency resource indicated by the first field is different from the downlink time-frequency resource for transmitting the first RAR.

In an embodiment, the downlink time-frequency resource indicated by the first field is the same as the downlink time-frequency resource for transmitting the first RAR.

In an embodiment, the N downlink time-frequency resources correspond one-to-one with the N PRACH occasions included in the first RO set, so that the second node can indicate the time-frequency resources corresponding to the first RAR to the first node.

In an example, when the second node configures the N downlink time-frequency resources for transmitting the first RAR, only the downlink time domain resource corresponding to the first PRACH occasion is valid, while the other resources are invalid. In this way, the first node can directly determine the first preamble based on the first field, while also reducing the occupation of wireless resources.

It should be understood that this configuration method may also be applied to the configuration of N uplink time domain resources mentioned earlier. When the second node indicates the N uplink time-frequency resources via the first RAR, one or more of the N uplink time-frequency resources used for uplink transmission by the first node are valid, while the others are invalid. For example, when the first uplink grant indicates that the time-frequency resource corresponding to the first PRACH occasion is used for uplink transmission, only the uplink time-frequency resource corresponding to the first PRACH occasion is valid among the N uplink time-frequency resources.

For ease of understanding, the following provides an exemplary description of the configuration method for N uplink or downlink time-frequency resources, with N set to 8, in conjunction with FIG. 9. The dashed lines in FIG. 9 represent time-frequency resources that are either virtual or invalid.

Referring to FIG. 9, eight time-frequency resources are configured in the time-frequency domain, corresponding one-to-one with the eight PRACH occasions in the first RO set. The eight time-frequency resources are resources 901 to 908. These eight time-frequency resources may be the downlink time-frequency resources indicated by the first field, or the uplink time-frequency resources indicated by the first RAR.

As shown in FIG. 9, the resource 903 is the valid time-frequency resource among the eight time-frequency resources. The resource 903 corresponds to the third PRACH occasion among the eight PRACH occasions.

By way of example, when the eight time-frequency resources are the downlink time-frequency resources indicated by the first field, the first node may receive the first RAR on the resource 903.

By way of example, when the eight time-frequency resources are the uplink time-frequency resources indicated by the first RAR, the first node may perform uplink transmission on the resource 903.

It should be understood that FIG. 9 is merely an example, and the resource configuration method illustrated in FIG. 9 may also be applied to other resource configuration scenarios in the embodiments of the present disclosure for ease of indication, without limitation.

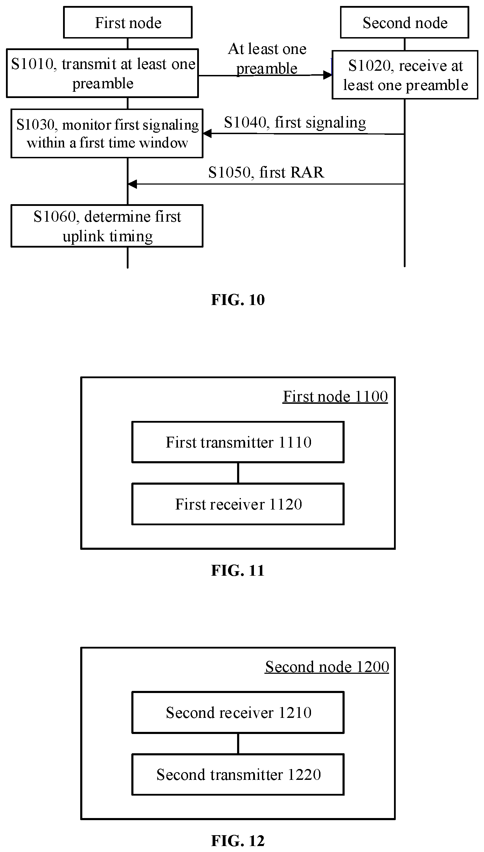

The following provides a more detailed description of the embodiments of the present disclosure, in conjunction with a specific example in FIG. 10. It should be noted that the examples in FIG. 4 to FIG. 9 are merely intended to assist those skilled in the art in understanding the embodiments of the present disclosure and are not intended to limit the embodiments of the present disclosure to the specific values or specific scenarios illustrated. Those skilled in the art, based on the examples in FIG. 4 to FIG. 9, can make various equivalent modifications or variations, and such modifications or variations are also within the scope of the embodiments of the present disclosure.

FIG. 10 illustrates the explanation from the perspective of the interaction between the first node and the second node.

Referring to FIG. 10, in S1010, the first node performs the transmission of at least one preamble. The at least one preamble may be one or more preambles carried by one or more PRACH transmissions in multiple PRACH transmissions. For example, when the first node drops one or more PRACH transmissions in the multiple PRACH transmissions due to uplink transmission conflicts, the at least one preamble is the preamble corresponding to the remaining PRACH transmissions.

In S1020, the second node receives at least one preamble. The second node may determine the first preamble from the at least one preamble. The second node determines the first TAC based on the first preamble.

In S1030, the first node monitors first signaling within a first time window.

In S1040, the second node sends the first signaling to the first node. The first signaling indicates the time-frequency resources occupied by the first RAR. The first signaling also indicates the first TAC determined by the second node.

In S1050, the second node sends the first RAR to the first node. The first RAR includes the first TAC. The first node may receive the first RAR within the first time window based on the first signaling.

In S1060, the first node determines the first uplink timing. The first node may determine the first uplink timing based on the first TAC and the transmission timing of the first preamble.

As shown in FIG. 10, the embodiments of the present disclosure define a technical solution in which, during multiple PRACH transmissions, regardless of whether the first node drops a PRACH transmission, the second node determines the first TAC, and the first node determines the first preamble corresponding to the first TAC. Based on the technical solutions described in FIG. 10 and the preceding sections, the second node can effectively indicate the TAC during the multiple PRACH transmissions, and the first node can determine the appropriate uplink timing.

The method embodiments of the present disclosure have been described in detail in conjunction with FIG. 1 to FIG. 10. The following provides a detailed description of the device embodiments of the present disclosure, in conjunction with FIG. 11 to FIG. 14. It should be understood that the descriptions of the method embodiments correspond to the descriptions of the device embodiments, so the parts that are not described in detail can be referred to in the previous method embodiments.

FIG.11 illustrates a first node for wireless communication according to the embodiments of the present disclosure. As shown in FIG. 11, the first node 1100 includes a first transmitter 1110 and a first receiver 1120.

The first transmitter 1110 is configured to transmit at least one preamble on a first RO set.

The first receiver 1120 is configured to receive a first RAR within a first time window, where the first RAR includes a first TAC. The first RO set includes N PRACH occasions, with a last PRACH occasion in the N PRACH occasions being used for determining a start time of the first time window. The at least one preamble is respectively carried on at least one PRACH occasion in the first RO set, where the first preamble is one of the at least one preamble. The first uplink timing is related to both the first TAC and transmission timing of the first preamble. N is one of 2, 4, or 8.

In an embodiment, the at least one preamble includes a second preamble, where the transmission timing of the second preamble is different from the transmission timing of the first preamble.

In an embodiment, the number of preambles included in the at least one preamble is less than or equal to the N.

In an embodiment, the first node 1100 further includes a first processor, configured to determine the first preamble from the at least one preamble. The first preamble is a last preamble among the at least one preamble in a time domain, or the first preamble is a first preamble among the at least one preamble in the time domain, or the position of the first preamble among the at least one preamble is configured.

In an embodiment, the first receiver 1120 is further configure to monitor the first signaling within the first time window. The first signaling indicates a time-frequency resource occupied by the first RAR. The first PRACH occasion is one of the N PRACH occasions. The first PRACH occasion is used for transmitting the first preamble, and the first PRACH occasion is indicated by the first RAR or the first signaling.

In an embodiment, the first signaling includes a first field, where the first field used for indicating the first PRACH occasion from the N PRACH occasions included in the first RO set.

In an embodiment, the first signaling schedules a first type of RAR, or the first signaling schedules a second type of RAR. The first RAR belongs to the first type of RAR. When the first signaling schedules the first type of RAR, the first field indicates the first PRACH occasion. When the first signaling schedules the second type of RAR, the first field is a reserved bit, or the first field is one of the multiple first-type fields included in the first signaling.

In an embodiment, the first field is at least one of frequency domain resource assignment and time domain resource assignment. The first field indicates one of N downlink time-frequency resources, where the N downlink time-frequency resources are in one-to-one correspondence with the N PRACH occasions included in the first RO set. One of the N downlink time-frequency resources is used for transmitting the first RAR.

In an embodiment, the first RAR includes first uplink grant, and the first uplink grant indicates N uplink time-frequency resources, where the N uplink time-frequency resources are in one-to-one correspondence with the N PRACH occasions included in the first RO set. One of the N uplink time-frequency resources is used for transmitting a message 3.

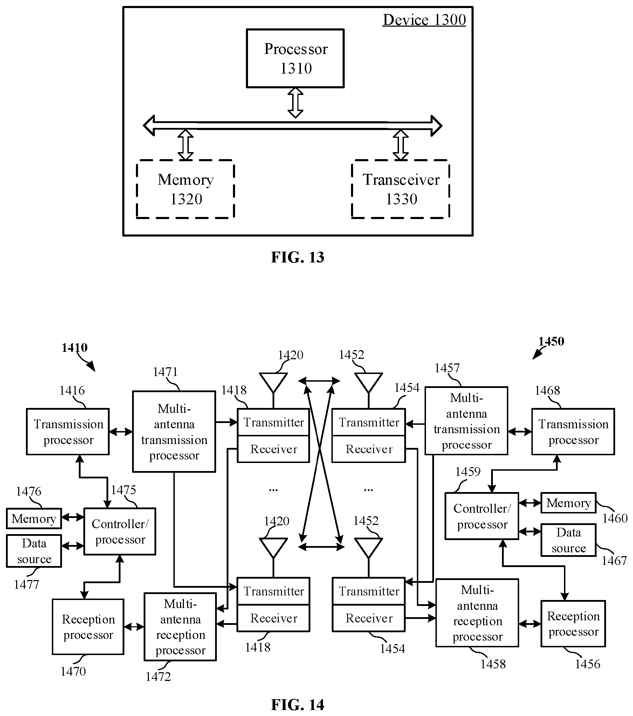

In an embodiment, the first transmitter 1110 and the first receiver 1120 may be a transceiver 1330, and the first node 1100 may further include a processor 1310 and a memory 1320, as shown in FIG. 13.

FIG. 12 illustrates a second node for wireless communication according to the embodiments of the present disclosure. As shown in FIG. 12, the second node 1200 includes a second receiver 1210 and a second transmitter 1220.

The second receiver 1210 is configured to receive at least one preamble on a first RO set.

The second transmitter 1220 is configured to transmit a first RAR within a first time window, where the first RAR includes a first TAC. The first RO set includes N PRACH occasions, where a last PRACH occasion in the N PRACH occasions is used for determining a start time of the first time window. The at least one preamble is respectively carried on at least one PRACH occasion in the first RO set, a first preamble is one of the at least one preamble. The first uplink timing is related to both the first TAC and transmission timing of the first preamble. N is one of 2, 4, or 8.

In an embodiment, the at least one preamble includes a second preamble, where transmission timing of the second preamble is different from the transmission timing of the first preamble.

In an embodiment, the number of preambles included in the at least one preamble is less than or equal to the N.

In an embodiment, the second node 1200 further includes a second processor, configured to determine the first preamble from the at least one preamble. The first preamble is a last preamble among the at least one preamble in a time domain, or the first preamble is a first preamble among the at least one preamble in the time domain, or, a position of the first preamble among the at least one preamble is configured.

In an embodiment, the second transmitter 1220 is also configured to transmit the first signaling within the first time window. The first signaling indicates a time-frequency resources occupied by the first RAR. The first PRACH occasion is one of the N PRACH occasions, where the first PRACH occasion is used for transmitting the first preamble. The first RAR or the first signaling indicates the first PRACH occasion, and the first PRACH occasion is configured to transmit the first preamble.

In an embodiment, the first signaling includes a first field. The first field is used for indicating the first PRACH occasion from the N PRACH occasions included in the first RO set.

In an embodiment, the first signaling schedules a first type of RAR, or the first signaling schedules a second type of RAR. The first RAR belongs to the first type of RAR. When the first signaling schedules the first type of RAR, the first field indicates the first PRACH occasion. When the first signaling schedules the second type of RAR, the first field is either a reserved bit, or is one of multiple first-type fields included in the first signaling.

In an embodiment, the first field is at least one of frequency domain resource assignment and time domain resource assignment. The first field indicates one of the N downlink time-frequency resources, where the N downlink time-frequency resources are in one-to-one correspondence with the N PRACH occasions included in the first RO set. One of the N downlink time-frequency resources is used for transmitting the first RAR.

In an embodiment, the first RAR includes a first uplink grant, and the first uplink grant indicates N uplink time-frequency resources. The N uplink time-frequency resources are in one-to-one correspondence with the N PRACH occasions included in the first RO set. One of the N uplink time-frequency resources is used for transmitting a message 3.

In an embodiment, the second receiver 1210 and the second transmitter 1220 may be transceivers 1330, and the second node 1200 may also include a processor 1310 and a memory 1320, as shown in FIG. 13.

FIG. 13 is a schematic structural diagram of a communication device according to an embodiment of the present disclosure. The dashed lines in FIG. 13 indicate that the unit or module is optional. The device 1300 may be configured to implement the methods described in the method embodiments above. The device 1300 may be a chip, user equipment (UE), or a network device.

The device 1300 may include one or more processors 1310. The processor 1310 can support the device 1300 in implementing the methods described in the previous method embodiments. The processor 1310 may be a general-purpose processor or a dedicated processor. For example, the processor may be a central processing unit (CPU). Alternatively, the processor may also be another general-purpose processor, a digital signal processor (DSP), an application-specific integrated circuit (ASIC), a field-programmable gate array (FPGA), or other programmable logic devices, a discrete gate or transistor logic device, a discrete hardware component, etc. The general-purpose processor may be a microprocessor or any conventional processor.

The device 1300 may also include one or more memories 1320. The memory 1320 stores a program, when executed by processor 1310, causing the processor 1310 to implement the methods described in the previous method embodiments. The memory 1320 may be independent of the processor 1310 or integrated into the processor 1310.

The device 1300 may also include a transceiver 1330. The processor 1310 can communicate with other devices or chips through the transceiver 1330. For example, the processor 1310 may transmit data to or receive data from other devices or chips through the transceiver 1330.

FIG. 14 is a schematic diagram of the hardware modules of the communication devices according to the embodiment of the present disclosure. Specifically, FIG. 14 shows block diagrams of a first communication device 1450 and a second communication device 1410, which communicate with each other in the access network.

The first communication device 1450 includes a controller/processor 1459, a memory 1460, a data source 1467, a transmission processor 1468, a reception processor 1456, a multi-antenna transmission processor 1457, a multi-antenna reception processor 1458, a transmitter/receiver 1454, and an antenna 1452.

The second communication device 1410 includes a controller/processor 1475, a memory 1476, a data source 1477, a reception processor 1470, a transmission processor 1416, a multi-antenna reception processor 1472, a multi-antenna transmission processor 1471, a transmitter/receiver 1418, and an antenna 1420.

In the transmission from the second communication device 1410 to the first communication device 1450, at the second communication device 1410, the upper-layer data packets from the core network or from the data source 1477 are provided to the controller/processor 1475. The core network and data source 1477 represent all protocol layers above the L2 layer. The controller/processor 1475 implements the functionality of the L2 layer. In the transmission from the second communication device 1410 to the first communication device 1450, the controller/processor 1475 provides header compression, encryption, packet segmentation and reordering, multiplexing between logical and transport channels, and wireless resource allocation for the first communication device 1450 based on various priority metrics. The controller/processor 1475 is also responsible for retransmitting lost packets and signaling to the first communication device 1450. The transmission processor 1416 and the multi-antenna transmission processor 1471 implement various signal processing functions for the Ll layer (i.e., physical layer). The transmission processor 1416 performs encoding and interleaving to facilitate forward error correction at the second communication device 1410, and maps signal clusters based on various modulation schemes (e.g., binary phase-shift keying, quadrature phase-shift keying, M-ary phase-shift keying, M-ary quadrature amplitude modulation). The multi-antenna transmission processor 1471 performs digital spatial precoding on the encoded and modulated symbols, including codebook-based precoding and non-codebook-based precoding, and beamforming processing to generate one or more spatial streams. The transmission processor 1416 then maps each spatial stream to subcarriers, multiplexes it in the time and/or frequency domain with reference signals (e.g., pilots), and then uses the inverse fast Fourier transform to generate a physical channel carrying a multi-carrier symbol stream in the time domain. The multi-antenna transmission processor 1471 then performs transmission of the time-domain multi-carrier symbol stream with simulated precoding/beamforming operations. Each transmitter 1418 converts the baseband multi-carrier symbol stream provided by the multi-antenna transmission processor 1471 into a radio frequency stream, which is then provided to different antennas 1420.

In the transmission from the second communication device 1410 to the first communication device 1450, at the first communication device 1450, each receiver 1454 receives the signal through its respective antenna 1452. Each receiver 1454 recovers the information modulated onto the radio frequency carrier and converts the radio frequency stream into a baseband multi-carrier symbol stream, which is provided to the reception processor 1456. The reception processor 1456 and the multi-antenna reception processor 1458 implement various signal processing functions for the L1 layer. The multi-antenna reception processor 1458 performs reception operations of simulation precoding/beamforming on the baseband multi-carrier symbol stream from the receiver 1454. The reception processor 1456 uses the Fast Fourier Transform to convert the baseband multi-carrier symbol stream after reception operations of simulation precoding/beamforming, from the time domain to the frequency domain. In the frequency domain, the physical layer data signals and reference signals are demultiplexed by the reception processor 1456. The reference signals are used for channel estimation, and the data signals are restored in the multi-antenna reception processor 1458 after multi-antenna detection. Any spatial streams directed to the first communication device 1450 are recovered. The symbols on each spatial stream are demodulated and restored by the reception processor 1456, generating soft decisions. The reception processor 1456 then decodes and de-interleaves the soft decisions to recover the upper-layer data and control signals transmitted by the second communication device 1410 over the physical channel. The upper-layer data and control signals are subsequently provided to the controller/processor 1459. The controller/processor 1459 implements the functionality of the L2 layer and may be associated with a memory 1460 that stores program code and data. The memory 1460 may be referred to as a computer-readable medium. In the transmission from the second communication device 1410 to the first communication device 1450, the controller/processor 1459 provides multiplexing between transport and logical channels, packet reassembly, decryption, header decompression, and control signal processing to recover the upper-layer data packets from the second communication device 1410. The upper-layer data packets are then provided to all protocol layers above the L2 layer. Various control signals may also be transmitted to the layer 3 (L3) for L3 processing.

In the transmission from the first communication device 1450 to the second communication device 1410, at the first communication device 1450, the upper-layer data packets are provided to the controller/processor 1459 using the data source 1467. The data source 1467 represents all protocol layers above the L2 layer. Similar to the transmission described at the second communication device 1410 in the transmission from the second communication device 1410 to the first communication device 1450, the controller/processor 1459 implements header compression, encryption, packet segmentation and reordering, as well as multiplexing between logical and transport channels, and implements L2 layer functionality for both the user plane and control plane. The controller/processor 1459 is also responsible for retransmitting lost packets and signaling to the second communication device 1410. The transmission processor 1468 performs modulation mapping and channel coding processing, while the multi-antenna transmission processor 1457 performs digital multi-antenna spatial precoding, including both codebook-based and non-codebook-based precoding, as well as beamforming processing. The transmission processor 1468 then modulates the generated spatial streams into multi-carrier/single-carrier symbol streams. After undergoing simulation precoding/beamforming operations in the multi-antenna transmission processor 1457, the processed signal is transmitted through the transmitter 1454 to different antennas 1452. Each transmitter 1454 first converts the baseband symbol stream provided by the multi-antenna transmission processor 1457 into a radio frequency symbol stream, which is then provided to the antennas 1452.

In the transmission from the first communication device 1450 to the second communication device 1410, the functions at the second communication device 1410 are similar to the receiving functions at the first communication device 1450 described in the transmission from the second communication device 1410 to the first communication device 1450. Each receiver 1418 receives a radio frequency signal via its respective antenna 1420, converts the received radio frequency signal into a baseband signal, and provides the baseband signal to the multi-antenna reception processor 1472 and the reception processor 1470. The reception processor 1470 and the multi-antenna reception processor 1472 jointly implement the Layer 1 (L1) functionality. The controller/processor 1475 implements Layer 2 (L2) functionality. The controller/processor 1475 may be associated with a memory 1476 that stores program code and data. The memory 1476 may be referred to as a computer-readable medium. In the transmission from the first communication device 1450 to the second communication device 1410, the controller/processor 1475 performs de-multiplexing between transport and logical channels, packet reassembly, decryption, header decompression, and control signal processing to recover upper-layer data packets from the first communication device 1450. The upper-layer data packets from the controller/processor 1475 may be delivered to the core network or to all protocol layers above L2, and various control signals may also be delivered to the core network or to Layer 3 (L3) for L3 processing.

In an embodiment, the first communication device 1450 includes at least one processor and at least one memory. The at least one memory stores computer program code. The at least one memory and the computer program code are configured to, in conjunction with the at least one processor, cause the first communication device 1450 to at least: transmit at least one preamble on a first RO set; and receive a first RAR within a first time window. The first RAR includes a first TAC. The first RO set includes N PRACH occasions, and a last PRACH occasion among the N PRACH occasions is used for determining a start time of the first time window. The at least one preamble is respectively carried on at least one PRACH occasion in the first RO set. A first preamble is one of the at least one preamble, and first uplink timing is related to both the first TAC and a transmission timing of the first preamble. N is one of 2, 4, or 8.

In an embodiment, the first communication device 1450 includes a memory storing computer-readable instruction code. The computer-readable instruction code, when executed by at least one processor, causes the device to: transmit at least one preamble on a first RO set, and receive a first RAR within a first time window. The first RAR includes a first TAC. The first RO set includes N PRACH occasions, and a last PRACH occasion among the N PRACH occasions is used for determining a start time of the first time window. The at least one preamble is respectively carried on at least one PRACH occasion in the first RO set. A first preamble is one of the at least one preamble, and first uplink timing is related to both the first TAC and a transmission timing of the first preamble. N is one of 2, 4, or 8.

In an embodiment, the first communication device 1450 corresponds to the first node described in the present disclosure.

In an embodiment, the second communication device 1410 corresponds to the second node described in the present disclosure.

In an embodiment, the first communication device 1450 is user equipment, and the user equipment may serve as a relay node.

In an embodiment, the first communication device 1450 is V2X-capable user equipment, and the user equipment may serve as a relay node.

In an embodiment, the first communication device 1450 is D2D-capable user equipment, and the user equipment may serve as a relay node.

In an embodiment, the first communication device 1450 is a network-controlled relay (NCR).

In an embodiment, the first communication device 1450 is a relay repeater.

In an embodiment, the first communication device 1450 is a relay.

In an embodiment, the second communication device 1410 is a base station.

In an embodiment, the antenna 1452, the transmitter 1454, the multi-antenna transmission processor 1457, the transmission processor 1468, and the controller/processor 1459 are configured to transmit at least one preamble on a first RO set.

In an embodiment, the antenna 1420, the receiver 1418, the multi-antenna reception processor 1472, the reception processor 1470, and the controller/processor 1475 are configured to receive at least one preamble on a first RO set.

In an embodiment, the antenna 1452, the receiver 1454, the multi-antenna reception processor 1458, the reception processor 1456, and the controller/processor 1459 are configured to receive a first RAR within a first time window.

In an embodiment, the antenna 1420, the transmitter 1418, the multi-antenna transmission processor 1471, the transmission processor 1416, and the controller/processor 1475 are configured to transmit a first RAR within the first time window.

A computer-readable storage medium configured to store a program is further provided according to the embodiments of the present disclosure. The computer-readable storage medium may be applied to a terminal or network device provided in embodiments of the present disclosure, and the program, when executed by a computer, causes the computer to implement the methods executed by the terminal or network device as described in various embodiments of the present disclosure.

A computer program product including a program is further provided according to the embodiments of the present disclosure. The computer program product may be applied to a terminal or network device provided in embodiments of the present disclosure, and the program, when executed by a computer, causes the computer to implement the methods executed by the terminal or network device as described in various embodiments of the present disclosure.

A computer program is further provided according to the embodiments of the present disclosure. The computer program may be applied to a terminal or network device provided in embodiments of the present disclosure, and the computer program, when executed by a computer, causes the computer to implement the methods executed by the terminal or network device as described in various embodiments of the present disclosure.

The terms "system" and "network" as used herein may be used interchangeably. Furthermore, the terminology used in the present disclosure is intended solely to describe particular embodiments of the present disclosure and is not intended to limit the scope of the present disclosure. The terms "first," "second," "third," "fourth," and the like as used in the description and claims of the present disclosure and in the accompanying drawings are intended to distinguish different objects and are not intended to indicate any particular order. In addition, the terms "include" and "have" as well as any variations thereof are intended to cover non-exclusive inclusion.

In the embodiments of the present disclosure, the term "indicate" may refer to a direct indication, an indirect indication, or an indication of an association. For example, "A indicating B" may mean: that A directly indicating B, e.g., B being obtainable from A; that A indirectly indicating B, e.g., A indicating C and B being obtainable from C; or that A and B are associated.

In the embodiments of the present disclosure, the phrase "B corresponding to A" indicates that B is associated with A OR can be determined based on A. It should also be understood that determining B based on A does not necessarily mean determining B solely based on A. Instead, B may be determined based on A and/or other information.

In the embodiments of the present disclosure, the term "correspond" may refer to a direct or indirect correspondence between two entities, an association between them, or a relationship such as one indicating or being indicated by the other, or one being configured with or by the other.

In the embodiments of the present disclosure, the terms "predefined" or "preconfigured" can be realized by pre-storing corresponding codes, tables, or other forms in devices (e.g., including user equipment and network devices) to indicate the relevant information. The present disclosure does not limit the specific implementations. For example, "predefined" can refer to definitions in the protocol.

In the embodiments of the present disclosure, the term "protocol" may refer to a standard protocol in the communication field, for example, including the LTE protocol, the NR protocol, or protocols applicable to future communication systems, without limitation thereto.

In the embodiments of the present disclosure, the term "and/or" is merely used to describe an association between related objects, indicating that three types of relationships may exist. For example, "A and/or B" may refer to: only A, both A and B, or only B. Additionally, the character "/" generally denotes an "or" relationship between the related objects preceding and following it.

In the embodiments of the present disclosure, the numerical labels assigned to the above-mentioned operations do not necessarily indicate the sequence of execution. The sequence of execution of the operations should be determined based on their functions and inherent logic, and should not be construed as a limitation on the implementation process of the embodiments of the present disclosure.

In the several embodiments provided in the present disclosure, it should be understood that the disclosed systems, apparatus, and methods may be implemented in other manners. For example, the apparatus embodiments described above are merely illustrative. The division of the units is only one example of logical functional division. In actual implementation, other forms of division may be adopted. For example, multiple units or components may be combined or integrated into another system, or some features may be omitted or not performed. Additionally, the couplings or direct couplings or communication connections shown or discussed between modules may be indirect couplings or communication connections through some interfaces, devices, or units, and such connections may be electrical, mechanical, or of other types.

The units described as separate components may or may not be physically separated, and the component displayed as a unit may or may not be a physical unit. That is, the units may be located in one place or distributed across multiple network units. Some or all of the units may be selected as needed to achieve the objectives of the embodiments of the present disclosure.

In addition, the functional units in various embodiments of the present disclosure may be integrated into one processing unit, or each unit may exist independently in a physical form, or two or more units may be integrated into one unit.

In the foregoing embodiments, all or part of the implementations may be realized by software, hardware, firmware, or any combination thereof. When implemented using software, such implementations may be provided in the form of a computer program product. The computer program product includes one or more computer instructions, which, when loaded and executed on a computer, cause the computer to perform all or part of the processes or functions described in the embodiments of the present disclosure. The computer may be a general-purpose computer, a dedicated computer, a computer network, or other programmable apparatus. The computer instructions may be stored on a computer-readable storage medium or transmitted from one computer-readable storage medium to another, for example, from a website, computer, server, or data center to another website, computer, server, or data center via wired (e.g., a coaxial cable, an optical fiber, a digital subscriber line (DSL)) or wireless (e.g., infrared, radio, microwave, etc.) means. The computer-readable storage medium may be any accessible medium readable by a computer, or a data storage device such as a server or data center integrating one or more accessible media. The accessible media may include, for example, magnetic media (such as floppy disks, hard disks, magnetic tapes), optical media (such as a digital video disc (DVD)), or semiconductor media (such as a solid-state drive (SSD)), and the like.

It should be understood by those skilled in the art that all or part of the operations of the above-described methods may be instructed by programs to be executed by corresponding hardware. Such programs may be stored in a computer-readable storage medium, e.g., a read-only memory, a hard disk, or an optical disc. Alternatively, all or part of the operations of the above-described embodiments may also be implemented using one or more integrated circuits. Correspondingly, each module unit described in the above embodiments may be implemented in hardware or in the form of a software functional module. The present disclosure is not limited to any particular combination of software and hardware. The first node described in the present disclosure includes, but is not limited to, wireless communication devices such as mobile phones, tablet computers, notebook computers, internet access cards, low-power devices, enhanced machine-type communication (eMTC) devices, narrowband Internet of Things (NB-IoT) devices, in-vehicle communication devices, aircraft, airplanes, unmanned aerial vehicles, and remotely piloted aircraft. The second node described in the present disclosure includes, but is not limited to, wireless communication devices such as mobile phones, tablet computers, notebook computers, internet access cards, low-power devices, eMTC devices, NB-IoT devices, in-vehicle communication devices, aircraft, airplanes, unmanned aerial vehicles, and remotely piloted aircraft. The user equipment, UE or terminal described in the present disclosure includes, but is not limited to, wireless communication devices such as mobile phones, tablet computers, notebook computers, internet access cards, low-power devices, eMTC devices, NB-IoT devices, in-vehicle communication devices, aircraft, airplanes, UAVs, and remotely piloted aircraft. The base station device, base station, or network-side device described in the present disclosure includes, but is not limited to, wireless communication devices such as macro base stations, micro base stations, home base stations, relay base stations, eNBs, gNBs, TRPs, global navigation satellite systems (GNSS), relay satellites, satellite base stations, and aerial base stations.

The foregoing description merely illustrates specific embodiments of the present disclosure and should not be construed as limiting the scope of protection of the present disclosure. Any variations or substitutions readily conceived by those skilled in the art within the scope of the technical disclosure of the present disclosure shall fall within the scope of protection of the present disclosure. Therefore, the scope of protection of the present disclosure shall be defined by the claims.

## Claims

1. A method in a first node for wireless communication, comprising:
transmitting at least one preamble on a first random access channel occasion (RO) set; and
receiving a first random access response (RAR) within a first time window, wherein the first RAR comprises a first timing advance command (TAC),
wherein the first RO set comprises N physical random access channel (PRACH) occasions, a last PRACH occasion among the N PRACH occasions is used for determining a start of the first time window, the at least one preamble is respectively carried on at least one PRACH occasion in the first RO set, a first preamble is one of the at least one preamble, first uplink timing is related to both the first TAC and transmission timing of the first preamble, and N is one of 2, 4, or 8.

2. The method according to claim 1, wherein the at least one preamble comprises a second preamble, and transmission timing of the second preamble is different from the transmission timing of the first preamble.

3. The method according to claim 1 or 2, wherein a number of the at least one preamble is less than or equal to the N.

4. The method according to any one of claims 1 to 3, further comprising:
determining the first preamble from the at least one preamble, wherein the first preamble is a last preamble among the at least one preamble in a time domain, or the first preamble is a first preamble among the at least one preamble in the time domain, or a position of the first preamble among the at least one preamble is configured.

5. The method according to any one of claims 1 to 3, further comprising:
monitoring first signaling within the first time window, wherein the first signaling indicates a time-frequency resource occupied by the first RAR, a first PRACH occasion is one of the N PRACH occasions, the first PRACH occasion is used for transmitting the first preamble, and the first PRACH occasion is indicated by the first RAR or the first signaling.

6. The method according to claim 5, wherein the first signaling comprises a first field, and the first field is used for indicating the first PRACH occasion from the N PRACH occasions comprised in the first RO set.

7. The method according to claim 6, wherein
the first signaling schedules a first type of RAR, or the first signaling is schedules a second type of RAR;
the first RAR belongs to the first type of RAR;
in case of the first signaling scheduling the first type of RAR, the first field indicates the first PRACH occasion; and
in case of the first signaling scheduling the second type of RAR, the first field is a reserved bit, or the first field is one of a plurality of first-type fields comprised in the first signaling.

8. The method according to claim 6 or 7, wherein the first field is at least one of frequency domain resource assignment and time domain resource assignment, the first field indicates one of N downlink time-frequency resources, the N downlink time-frequency resources are in one-to-one correspondence with the N PRACH occasions comprised in the first RO set, and one of the N downlink time-frequency resources is used for transmitting the first RAR.

9. The method according to claim 5, wherein the first RAR comprises a first uplink grant, the first uplink grant indicates N uplink time-frequency resources, the N uplink time-frequency resources are in one-to-one correspondence with the N PRACH occasions comprised in the first RO set, and one of the N uplink time-frequency resources is used for transmitting a message 3.

10. A method in a second node for wireless communication, comprising:
receiving at least one preamble on a first random access channel occasion (RO) set; and
transmitting a first random access response (RAR) within a first time window, wherein the first RAR comprises a first timing advance command (TAC), wherein the first RO set comprises N physical random access channel (PRACH) occasions, a last PRACH occasion among the N PRACH occasions is used for determining a start of the first time window, the at least one preamble is respectively carried on at least one PRACH occasion in the first RO set, a first preamble is one of the at least one preamble, first uplink timing is related to both the first TAC and transmission timing of the first preamble, and N is one of 2, 4, or 8.

11. The method according to claim 10, wherein the at least one preamble comprises a second preamble, and transmission timing of the second preamble is different from the transmission timing of the first preamble.

12. The method according to claim 10 or 11, wherein a number of the at least one preamble is less than or equal to the N.

13. The method according to any one of claims 10 to 12, further comprising:
determining the first preamble from the at least one preamble, wherein the first preamble is a last preamble among the at least one preamble in a time domain, or the first preamble is a first preamble among the at least one preamble in the time domain, or a position of the first preamble among the at least one preamble is configured.

14. The method according to any one of claims 10 to 12, further comprising:
transmitting first signaling within the first time window, wherein the first signaling indicates a time-frequency resource occupied by the first RAR, wherein a first PRACH occasion is one of the N PRACH occasions, the first PRACH occasion is used for transmitting the first preamble, and the first PRACH occasion is indicated by the first RAR or the first signaling.

15. The method according to claim 14, wherein the first signaling comprises a first field, and the first field is used for indicating the first PRACH occasion from the N PRACH occasions comprised in the first RO set.

16. The method according to claim 15, wherein
the first signaling schedules a first type of RAR, or the first signaling schedules a second type of RAR;
the first RAR belongs to the first type of RAR;
in case of the first signaling scheduling the first type of RAR, the first field indicates the first PRACH occasion; and
in case of the first signaling scheduling the second type of RAR, the first field is a reserved bit, or the first field is one of a plurality of first-type fields comprised in the first signaling.

17. The method according to claim 15 or 16, wherein the first field is at least one of frequency domain resource assignment and time domain resource assignment, the first field indicates one of N downlink time-frequency resources, the N downlink time-frequency resources are in one-to-one correspondence with the N PRACH occasions comprised in the first RO set, and one of the N downlink time-frequency resources is used for transmitting the first RAR.

18. The method according to claim 14, wherein the first RAR comprises a first uplink grant, the first uplink grant indicates N uplink time-frequency resources, the N uplink time-frequency resources are in one-to-one correspondence with the N PRACH occasions comprised in the first RO set, and one of the N uplink time-frequency resources is used for transmitting a message 3.

19. A first node for wireless communication, comprising:
a first transmitter, configured to transmit at least one preamble on a first random access channel occasion (RO) set; and
a first receiver, configured to receive a first random access response (RAR) within a first time window, wherein the first RAR comprises a first timing advance command (TAC), wherein the first RO set comprises N PRACH occasions, a last PRACH occasion among the N PRACH occasions is used for determining a start of the first time window, the at least one preamble is respectively carried on at least one PRACH occasion in the first RO set, a first preamble is one of the at least one preamble, first uplink timing is related to both the first TAC and transmission timing of the first preamble, and N is one of 2, 4, or 8.

20. The first node according to claim 19, wherein the at least one preamble comprises a second preamble, and transmission timing of the second preamble is different from the transmission timing of the first preamble.

21. The first node according to claim 19 or 20, wherein a number of the at least one preamble is less than or equal to the N.

22. The first node according to any one of claims 19 to 21, further comprising:
a first processor, configured to determine the first preamble from the at least one preamble, wherein the first preamble is a last preamble among the at least one preamble in a time domain, or the first preamble is a first preamble among the at least one preamble in the time domain, or a position of the first preamble among the at least one preamble is configured.

23. The first node according to any one of claims 19 to 21, wherein the first receiver is further configured to monitor first signaling within the first time window, the first signaling indicates a time-frequency resource occupied by the first RAR, a first PRACH occasion is one of the N PRACH occasions, the first PRACH occasion is used for transmitting the first preamble, and the first PRACH occasion is indicated by the first RAR or the first signaling.

24. The first node according to claim 23, wherein the first signaling comprises a first field, and the first field is used for indicating the first PRACH occasion from the N PRACH occasions comprised in the first RO set.

25. The first node according to claim 24, wherein
the first signaling schedules a first type of RAR, or the first signaling is schedules a second type of RAR;
the first RAR belongs to the first type of RAR;
in case of the first signaling scheduling the first type of RAR, the first field indicates the first PRACH occasion; and
in case of the first signaling scheduling the second type of RAR, the first field is a reserved bit, or the first field is one of a plurality of first-type fields comprised in the first signaling.

26. The first node according to claim 24 or 25, wherein the first field is at least one of frequency domain resource assignment and time domain resource assignment, the first field indicates one of N downlink time-frequency resources, the N downlink time-frequency resources are in one-to-one correspondence with the N PRACH occasions comprised in the first RO set, and one of the N downlink time-frequency resources is used for transmitting the first RAR.

27. The first node according to claim 23, wherein the first RAR comprises a first uplink grant, the first uplink grant indicates N uplink time-frequency resources, the N uplink time-frequency resources are in one-to-one correspondence with the N PRACH occasions comprised in the first RO set, and one of the N uplink time-frequency resources is used for transmitting a message 3.

28. A second node for wireless communication, comprising:
a second receiver, configured to receive at least one preamble on a first random access channel occasion (RO) set; and
a second transmitter, configured to transmit a first random access response (RAR) within a first time window, wherein the first RAR comprises a first timing advance command (TAC), wherein the first RO set comprises N physical random access channel (PRACH) occasions, a last PRACH occasion among the N PRACH occasions is used for determining a start of the first time window, the at least one preamble is respectively carried on at least one PRACH occasion in the first RO set, a first preamble is one of the at least one preamble, first uplink timing is related to both the first TAC and transmission timing of the first preamble, and N is one of 2, 4, or 8.

29. The second node according to claim 28, wherein the at least one preamble comprises a second preamble, and transmission timing of the second preamble is different from the transmission timing of the first preamble.

30. The second node according to claim 28 or 29, wherein a number of the at least one preamble is less than or equal to the N.

31. The second node according to any one of claims 28 to 30, further comprising:
a second processor, configured to determine the first preamble from the at least one preamble, wherein the first preamble is a last preamble among the at least one preamble in a time domain, or the first preamble is a first preamble among the at least one preamble in the time domain, or a position of the first preamble among the at least one preamble is configured.

32. The second node according to any one of claims 28 to 30, wherein the second transmitter is further configured to transmit first signaling within the first time window, the first signaling indicates a time-frequency resource occupied by the first RAR, wherein a first PRACH occasion is one of the N PRACH occasions, the first PRACH occasion is used for transmitting the first preamble, and the first PRACH occasion is indicated by the first RAR or the first signaling.

33. The second node according to claim 32, wherein the first signaling comprises a first field, and the first field is used for indicating the first PRACH occasion from the N PRACH occasions comprised in the first RO set.

34. The second node according to claim 33, wherein
the first signaling schedules a first type of RAR, or the first signaling schedules a second type of RAR;
the first RAR belongs to the first type of RAR;
in case of the first signaling scheduling the first type of RAR, the first field indicates the first PRACH occasion; and
in case of the first signaling scheduling the second type of RAR, the first field is a reserved bit, or the first field is one of a plurality of first-type fields comprised in the first signaling.

35. The second node according to claim 33 or 34, wherein the first field is at least one of frequency domain resource assignment and time domain resource assignment, the first field indicates one of N downlink time-frequency resources, the N downlink time-frequency resources are in one-to-one correspondence with the N PRACH occasions comprised in the first RO set, and one of the N downlink time-frequency resources is used for transmitting the first RAR.

36. The second node according to claim 32, wherein the first RAR comprises a first uplink grant, the first uplink grant indicates N uplink time-frequency resources, the N uplink time-frequency resources are in one-to-one correspondence with the N PRACH occasions comprised in the first RO set, and one of the N uplink time-frequency resources is used for transmitting a message 3.

37. A node for wireless communication, comprising: a transceiver, a memory, and a processor, wherein the memory is configured to store a program, the processor is configured to call the program from the memory and control the transceiver to receive or transmit a signal, to cause the node to implement the method according to any one of claims 1 to 9 or 10 to 18.

38. A device, comprising: a processor configured to call a program from a memory, to cause the device to implement the method according to any one of claims 1 to 9 or 10 to 18.

39. A chip, comprising: a processor configured to call a program from a memory, to cause a device in which the chip is installed to implement the method according to any one of claims 1 to 9 or 10 to 18.

40. A computer-readable storage medium, having a program stored thereon, when executed by a computer, causing the computer to implement the method according to any one of claims 1 to 9 or 10 to 18.

41. A computer program product, comprising: a program, when executed by a computer, causing the computer to implement the method according to any one of claims 1 to 9 or 10 to 18.

42. A computer program, when executed by a computer, causes the computer to implement the method according to any one of claims 1 to 9 or 10 to 18.
